# FASCICULE DE BREVET EUROPEEN

(11) **EP 1 463 401 B1**
(45) Date de publication et mention de la délivrance du brevet: **02.11.2005**
(21) Numéro de dépôt: 02805370.0
(22) Date de dépôt: 12.12.2002
(51) Int. Cl.: A01B 29/04

(54) **ROULEAU POUR LA PREPARATION DU SOL DU TYPE ROULEAU A SPIRES**
BODENBEARBEITUNGSWALZE MIT SCHRAUBENFÖRMIGEN ELEMENTEN
SOIL TILLAGE ROLLER WITH HELICAL ELEMENTS

(30) Priorité: 18.12.2001 FR 0116330
(43) Date de publication de la demande: 06.10.2004
(73) Titulaire: ETABLISSEMENTS FRANQUET, F-02190 Guignicourt (FR)
(72) Inventeur: BOUCTON, Jean, F-51110 Bazancourt (FR)
(74) Mandataire: Hammond, William
(86) Numéro de dépôt international: PCT/FR2002/004295
(87) Numéro de publication internationale: WO 2003/053128

(56) Documents cités:
- FR-A- 616 945
- GB-A- 2 117 212
- US-A- 1 836 984
- US-A- 2 300 851
- US-A- 5 074 363

## Description

La présente invention est relative à un rouleau pour la préparation du sol du type rouleau à spires.

On connaît un grand nombre de types de rouleaux pour la préparation du sol : ils servent en particulier à contrôler l'appui au sol de l'outil de préparation du sol et, en même temps, à l'affinage et au rappuyage de la terre. Ces rouleaux ont pour particularité de s'auto-nettoyer en roulant sur le sol. A titre d'exemples, on citera les rouleaux tubes, les rouleaux à pneus pleins ou souples, les rouleaux à spires, les rouleaux à barres, les rouleaux croskills.

Mais tous ces rouleaux posent tous des problèmes lorsque les conditions de travail sont difficiles. On observe, ainsi, des phénomènes de collage dans les cas de sols humides. Ceci est en particulier un handicap pour les rouleaux à spires.

Le document US-5 0740363-A est relatif à un rouleau comportant deux spires constituées chacune par une bande plate et s'interpénétrant : un tel dispositif ne donne guère mieux satisfaction dans des sols humides que les autres rouleaux connus.

Aussi un des buts de la présente invention est-il de fournir un rouleau pour la préparation du sol du type rouleau à spires qui permet de réaliser un auto-nettoyage continuel des parties travaillant le sol.

Un autre but de l'invention est de fournir un tel rouleau qui présente un coût d'entretien aussi faible que possible et ne nécessite aucun réglage.

Ces buts, ainsi que d'autres qui apparaîtront par la suite, sont atteints par un rouleau pour la préparation du sol du type rouleau à spires, comportant un châssis munis de deux supports latéraux verticaux, et au moins deux spires de même pas montées chacune sur un axe central horizontal dont les extrémités coopèrent avec des paliers disposés sur les supports latéraux verticaux correspondant, lequel rouleau est caractérisé, selon la présente invention, par le fait que les spires sont réalisées en une bande métallique inclinée par rapport à la verticale d'un angle compris entre 5° et 85°, et qu'elles sont situées l'une derrière l'autre avec un décalage d'un demi pas, les axes centraux étant distants l'un de l'autre du diamètre d'une spire diminuée de la largeur de la bande métallique.

Avantageusement, la concavité des bandes métalliques de deux spires situées l'une derrière l'autre est inversée.

La description qui va suivre et qui ne présente aucun caractère limitatif, doit être lue en regard des figures annexées, parmi lesquelles:

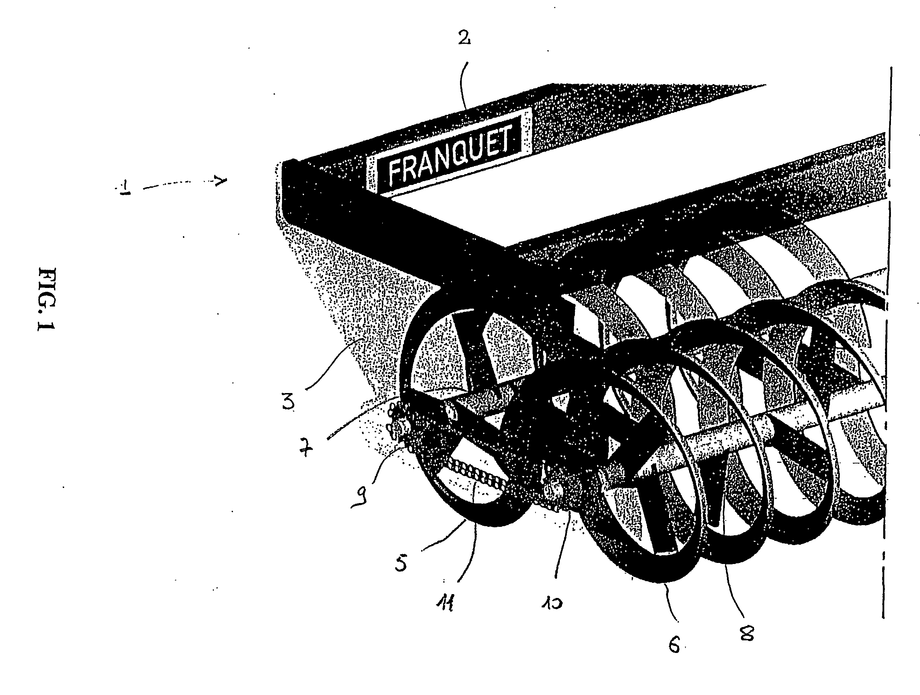

- la figure 1 est une vue en perspective partielle d'un rouleau selon la présente invention; et,

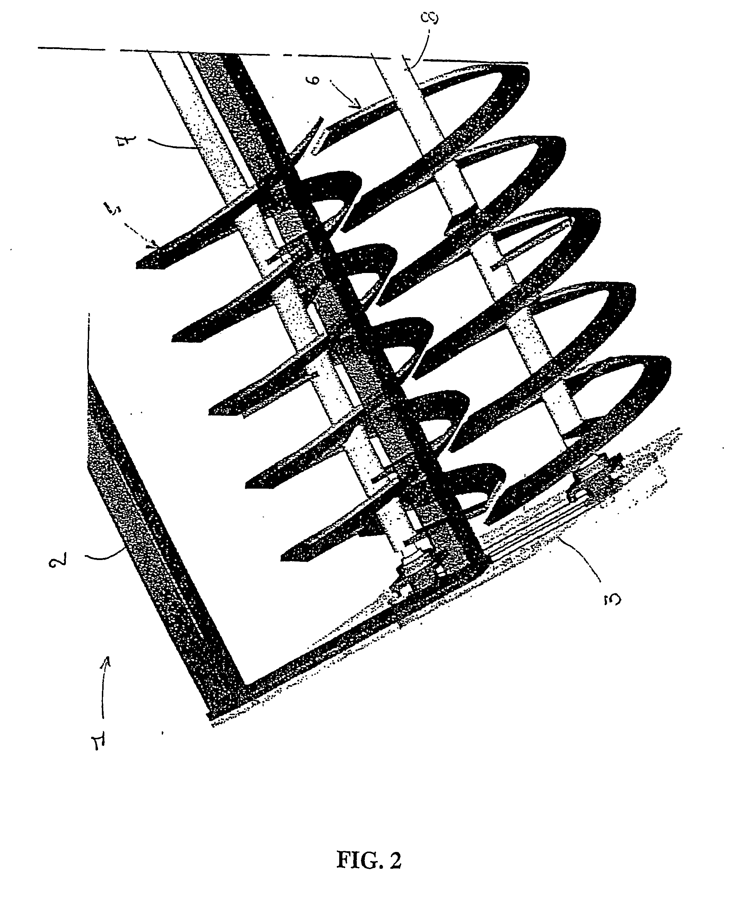

- la figure 2 est une vue de dessus partielle d'un tel rouleau.

Ainsi qu'on peut le voir sur ces figures, un rouleau pour la préparation du sol du type rouleau à spires, désigné dans son ensemble par la référence 1, comporte un châssis 2 muni de deux supports latéraux verticaux 3 et 4, et au moins deux spires 5 et 6 de même pas qui sont montées, de façon connue, chacune sur un axe central horizontal, 7 et 8 respectivement. Les extrémités de ces axes centraux 7 et 8 coopèrent avec des paliers disposés sur les supports latéraux verticaux 3 et 4 correspondants.

Selon la présente invention, les spires 5 et 6 sont réalisées en une bande métallique inclinée par rapport à la verticale d'un angle compris entre 5° et 85°. De plus, elles sont situées l'une derrière l'autre avec un décalage d'un demi pas, les axes centraux 7 et 8 étant distants l'un de l'autre du diamètre d'une spire diminué de la largeur de la bande métallique.

Selon un mode de réalisation préféré de l'invention, la concavité des bandes métalliques de deux spires situées l'une derrière l'autre est inversée.

Comme représenté sur les figures, les extrémités des axes centraux 7 et 8 situées d'un même côté peuvent être munies de pignons, 9 et 10 respectivement, reliés par une chaîne 11 : un tel montage permet d'assurer, comme cela est connu, une vitesse de rotation identique pour les axes centraux.

Ainsi, les deux spires 5 et 6 sont, par construction même, tangentes selon leurs génératrices : ceci a pour conséquence de prpvoquer un auto-nettoyage des spires. En effet, les bandes inclinées constitutives des spires 5 et 6 ont leurs faces en regard qui glissent l'une contre l'autre, entraînant par là-même une élimination de tout matériau pouvant se trouver sur cette face de l'une ou l'autre bande : on obtient donc un auto-nettoyage.

Une telle construction permet aussi d'obtenir un tassement uniforme en alternance avec un nivellement accru : le travail de préparation du sol n'en est donc que meilleur et ne nécessitera pas le passage d'un autre outil avant de semer.

Un rouleau selon la présente invention présente encore comme avantage inattendu, de permettre une portance trois à quatre fois supérieure par rapport aux rouleaux actuellement en service.

## Revendications

1. Rouleau pour la préparation du sol du type rouleau à spires, comportant, un châssis (2) munis de deux supports latéraux verticaux (3, 4), et au moins deux spires (5, 6) de même pas montées chacune sur un axe central horizontal (7 et 8 respectivement) dont les extrémités coopèrent avec des paliers disposés sur lesdits supports latéraux verticaux (3, 4) correspondant, **caractérisé par le fait que** lesdites spires (5, 6) sont réalisées en une bande métallique inclinée par rapport à la verticale d'un angle compris entre 5° et 85°, et qu'elles sont situées l'une derrière l'autre avec un décalage d'un demi pas, lesdits axes centraux (7, 8) étant distants l'un de l'autre du diamètre d'une spire diminué de la largeur de la bande.

2. Rouleau selon la revendication 1,**caractérisé par le fait que** la concavité des bandes métalliques de deux spires (5, 6) situées l'une derrière l'autre est inversée.

## Patentansprüche

1. Bodenbearbeitungswalze mit schraubenförmigen Elementen, umfassend ein Gestell (2), das mit zwei seitlichen, vertikalen Stützen (3, 4) versehen ist, und mindestens zwei Schrauben (5, 6) mit gleicher Ganghöhe, die jeweils an einer zentralen horizontalen Achse (7 bzw. 8) angebracht sind, deren Enden mit auf den seitlichen vertikalen Stützen (3, 4) angeordneten Lagern zusammenarbeiten, **dadurch gekennzeichnet, dass** die Schrauben (5, 6) aus einem Metallband, das zur Senkrechten in einem Winkel von 5 bis 85° geneigt ist, gefertigt sind und um eine halbe Ganghöhe versetzt hintereinander angeordnet sind, wobei die zentralen Achsen (7, 8) voneinander in einem Abstand angeordnet sind, der dem Durchmesser einer Schraube minus der Breite des Bands entspricht.

2. Walze nach Anspruch 1, **dadurch gekennzeichnet, dass** der konkave Verlauf des Metallbands von zwei nacheinander angeordneten Schrauben (5, 6) umgekehrt ist.

## Claims

1. A soil tillage roller with helical elements comprising a carrier frame (2) provided with two vertical lateral supports (3, 4) and at least two helical elements (5, 6) having the same pitch, each mounted on a horizontal central shaft (7 and 8 respectively), the ends of which cooperate with bearings arranged on said corresponding vertical lateral supports (3, 4), **characterised by** the fact that said helical elements (5, 6) are made of a metal strip inclined relative to the vertical by an angle of between 5° and 85°, and that they are located one behind the other offset by a half-pitch, said central shafts (7, 8) being set apart from each other by the diameter of a helical element less the width of the strip.

2. A roller according to claim 1, **characterised by** the fact that the concavity of the metal strips of two helical elements (5, 6) located one behind the other is inverted.
